# EUROPÄISCHE PATENTANMELDUNG

(11) **EP 3 904 248 A1**
(43) Veröffentlichungstag der Anmeldung: **03.11.2021**
(21) Anmeldenummer: 21170346.7
(22) Anmeldetag: 26.04.2021
(51) Int. Cl.: B65G 54/00, B65G 54/02, H02K 41/03

(54) **STÜTZSTRUKTUR FÜR EINEN PLANARMOTOR**

(30) Priorität: 27.04.2020 AT 503572020
(71) Anmelder: B&R Industrial Automation GmbH, 5142 Eggelsberg (AT)
(72) Erfinder: Hauer, Michael, 5142 Eggelsberg (AT); Flixeder, Stefan, 5142 Eggelsberg (AT); Haudum, Martin, 5142 Eggelsberg (AT)
(74) Vertreter: Patentanwälte Pinter & Weiss OG

(57) **Zusammenfassung**

Stützstruktur (7) für eine Transporteinheit (4) eines Planarmotors (3). Die Transporteinheit (4) ist von zumindest einem Stator (6) des Planarmotors (3) bewegbar und das Produkt (3) ist an der Transporteinheit (4) anordenbar. In zumindest einer in Bezug auf die Stützstruktur (7) definierten Stützlage der Transporteinheit (4) bringt die Stützstruktur (7) zumindest eine Stützkraft auf die Transporteinheit (4) auf, während zumindest eine Prozesskraft auf das Produkt (3) einwirkt, wobei die Prozesskraft zumindest teilweise von dem Produkt (3) auf die Transporteinheit (4) übertragen wird. Die zumindest eine Stützkraft wirkt der zumindest einen Prozesskraft entgegen. Die Transporteinheit (4) ist mittels des zumindest einen Stators (6) des Planarmotors (3) schwebend in die Stützlage und aus dieser heraus bewegbar. Die Stützstruktur (7) ist an einer Basis (8) montiert, wobei die Stützstruktur (7) die von der Stützkraft bedingte Gegenkraft zumindest teilweise an die Basis (8) ableitet. Eine Kraftübertragung an eine aktive Oberfläche des Stators (6) wird verringert und vorzugsweise gänzlich vermieden.

## Beschreibung

Die gegenständliche Offenbarung betrifft eine Stützstruktur für einen Planarmotor.

Planarmotoren sind grundsätzlich im Stand der Technik bekannt. Die US 9,202,719 B2 offenbart beispielsweise den grundlegenden Aufbau und die Funktionsweise eines solchen Planarmotors.

Ein Planarmotor weist im Wesentlichen eine Transportebene auf, entlang derer eine oder mehrere Transporteinheiten ("Shuttles") hauptsächlich zweidimensional bewegt werden können. Dazu sind am Planarmotor in der Regel an der Transportebene verteilt Antriebsspulen vorgesehen, die von einer Steuerungseinheit angesteuert werden, um ein bewegtes Magnetfeld in die gewünschte Bewegungsrichtung zu erzeugen. Die (üblicherweise fix montierten) Einheiten, welche die Antriebsspulen beinhaltet und die Transportebene ausbilden, werden allgemein als Stator bezeichnet. Alternativ können auch bewegbar angeordnete Permanentmagneten zur Erzeugung des bewegten Magnetfeldes vorgesehen sein. Im Zusammenhang mit der gegenständlichen Offenbarung werden hierin unabhängig von der Funktionsweise die ortsfesten Einheiten des Planarmmotors allgemein als Statoren und die an den Statoren bewegten Einheiten als Transporteinheiten bezeichnet.

An der Transporteinheit sind Antriebsmagnete (Permanentmagnete oder Elektromagnete) zweidimensional verteilt angeordnet, die mit dem Magnetfeld des Stators zusammenwirken, sodass eine Kraftwirkung in die gewünschte Bewegungsrichtung auf die Transporteinheit ausgeübt wird. Die Antriebsspulen und die Antriebsmagnete sind dabei vorteilhafterweise so angeordnet, dass neben einer eindimensionalen Bewegung entlang der von der Transportebene aufgespannten Achsen auch komplexere zweidimensionale Bewegungen der Transporteinheit in der Transportebene möglich sind. Ein Planarmotor kann beispielsweise als Transporteinrichtung in einem Produktionsprozess genutzt werden, wobei sehr flexible Transportprozesse mit komplexen Bewegungsprofilen realisiert werden können.

Moderne Planarmotoren erlauben es, hochpräzise Bewegungen einer über dem Stator schwebenden Transporteinheit in Richtung aller sechs Starrkörper-Freiheitsgrade auszuführen. Durch einen modularen Aufbau des Stators (in Form einer Segmentanordnung) sind translatorische Bewegungen in zwei Hauptbewegungsrichtungen im Wesentlichen uneingeschränkt möglich, außerdem können noch eine Translation in die dritte Raumrichtung ("Anheben" bzw. "Absenken") sowie eingeschränkte Rotationen (bis zu einer gewissen Auslenkung) ausgeführt werden. Die dafür erforderlichen Motorkräfte und - momente werden mittels (Elektro-) Magnetismus erzeugt.

Durch die Einwirkung von Prozesskräften und Prozessmomenten, wie etwa Trägheitskräften und/oder Kräften und Momenten, die in Bearbeitungsstationen auf das mit der Transporteinheit transportierte Produkt einwirken und von dem Produkt auf die Transporteinheit übertragen werden, kann es jedoch vorkommen, dass die Motorkräfte und - momente nicht ausreichen, um der Summe der Belastungen am Shuttle, insbesondere den gegebenen Prozesskräften und Prozessmomenten ausreichend entgegenwirken zu können. Dabei kann es auch vorkommen, dass das Shuttle die sensiblen Oberflächen der Statorkacheln berührt oder dagegen schlägt und diese dabei beschädigt.

WO 2018/176137 A1 offenbart Planarmotoren mit zahlreichen unterschiedlich ausgebildeten Shuttles und Statoren. Unter anderem lehrt dieses Dokument, in einem Übergabebereich zwischen einem Stator des Planarmotors und einem statorlosen Transportsystem (z.B. einem Förderband, Robotergreifer oder ähnlichem) den Stator mit Führungsbahnen abzusichern, sodass das Shuttle zuerst schwebend vom Stator in die Führungsbahn bewegt wird, dann auf der Führungsbahn (etwa auf Rollen) gleitet und von dem statorlosen Transportsystem weiterbewegt wird, wenn es den Bereich der Magnetwirkung des Stators verlassen hat.

Weiters sind im Fachbereich Planarmotoren bekannt, die Shuttles mit Rollkörpern (insbesondere Kugeln oder Rollen) aufweisen. Die Shuttles bewegen sich dabei nicht schwebend über den Statoren, sondern rollen auf deren Oberfläche und werden von den Statoren lediglich in Flächenrichtung bewegt. Dies erlaubt höhere Traglasten, was jedoch mit zusätzlichen Reibungsverlusten erkauft wird und eine Abnutzung der Elemente des Planarmotors mit sich bringt. Darüber hinaus besteht eine Gefahr, die Oberflächen der Statorkacheln zu beschädigen bzw. müssen diese besonders stabil gebaut werden.

Die gegenständliche Offenbarung hat die Aufgabe, die Nachteile des Standes der Technik zu lindern. Insbesondere sollen die maximal zulässigen Prozesskräfte erhöht werden, ohne die Funktionalität des Planarmotors zu beeinträchtigen.

Diese und weitere Aufgaben werden gemäß der gegenständlichen Offenbarung in einem ersten Aspekt durch eine Stützstruktur für eine Transporteinheit eines Planarmotors gelöst, wobei die Transporteinheit von zumindest einem Stator des Planarmotors bewegbar ist und das Produkt an der Transporteinheit anordenbar ist, wobei in zumindest einer in Bezug auf die Stützstruktur definierten Stützlage der Transporteinheit die Stützstruktur zumindest eine Stützkraft auf die Transporteinheit aufbringt, während zumindest eine Prozesskraft auf das Produkt einwirkt, wobei die Prozesskraft zumindest teilweise von dem Produkt auf die Transporteinheit übertragen wird, wobei die zumindest eine Stützkraft der zumindest einen Prozesskraft entgegenwirkt, wobei die Transporteinheit mittels des zumindest einen Stators des Planarmotors schwebend in die Stützlage und aus dieser heraus bewegbar ist, wobei die Stützstruktur an einer Basis montiert ist, wobei die Stützstruktur die von der Stützkraft bedingte Gegenkraft zumindest teilweise an die Basis ableitet und wobei eine Kraftübertragung an eine aktive Oberfläche des Stators verringert und vorzugsweise gänzlich vermieden wird. Dadurch kann die Einheit aus Transporteinheit und Produkt in einer genau auf die auftretenden Prozesskräfte abgestimmten Weise gestützt beziehungsweise gehalten werden, wobei die zulässigen Prozesskräfte nicht mehr durch die maximalen Motorkräfte und -momente beschränkt sind, die mit der Kombination aus Stator und Transporteinheit erzielbar sind. Es ist nicht erforderlich, die Statoroberfläche mit zusätzlichen Kräften zu beanspruchen, da die Prozesskräfte an die von der Statoroberfläche unabhängige Basis abgegeben werden. Zumindest können die Kräfte, die gegebenenfalls dennoch auf die aktive Oberfläche des Stators wirken, soweit verringert werden, dass diese geschont werden und eine Beschädigung derselben verhindert wird.

Mit dem Begriff "aktive Oberfläche des Stators" wird im Zusammenhang mit der gegenständlichen Offenbarung die Oberfläche des Stators bezeichnet, über der die Transporteinheit schwebend gehalten bzw. bewegt werden kann. Da die Basis von der Statoroberfläche unabhängig ist, ist sie in der Lage, Kräfte aufzunehmen, ohne dass dies negative Auswirkungen auf die motorisch wirksamen Strukturen des Stators (also insbesondere die sensiblen Statoroberfläche der Statorkacheln) hat und ohne dass die Kräfte von der Stützstruktur an die Statoroberfläche übertragen werden. Zumindest werden Kräfte, die gegebenenfalls dennoch auf die aktive Oberfläche wirken, soweit reduziert, dass diese geschont werden und eine Beschädigung verhindert wird. Die Basis kann auch ein Gehäuse bzw. eine Halterung sein, an der die Statorkacheln bzw. die Statorelemente, welche die Statoroberfläche ausbilden, befestigt sind. Als Basis können auch Montagepunkte verwendet werden, an denen die Statoren befestigt sind, oder an denen Statoren aneinander befestigt sind.

Eine Prozesskraft kann insbesondere eine von einem Werkzeug aufgebrachte Kraft, eine magnetische oder elektromagnetische Kraft, eine Trägheitskraft, ein von solchen Kräften bewirktes Moment oder eine Kombination solcher Kräfte sein. Zu Beispielen von mit einem Werkzeug aufgebrachten Kräften zählen durch eine Werkzeugeinwirkung aufgebrachte Kräfte (wie etwa Klemmkräfte, zur Verformung von Werkstücken aufgebrachte Kräfte, Kräfte, die bei einer spanabhebenden Bearbeitung auf ein Werkstück wirken, Anpresskräfte, etwa von Walzen, etc.). Zu Beispielen von aufgebrachten Momenten zählen, ohne darauf beschränkt zu sein, das Aufbringen von schraubbaren Elementen (wie etwa Schrauben, Muttern oder Schraubdeckeln, zum Beispiel beim Verschließen von Behältern wie etwa Flaschen) oder eine Bearbeitung mit rotierendem Werkzeug (zum Beispiel beim Bohren, Fräsen, Schleifen oder Schneiden). Zu Beispielen von Trägheitskräften und -momenten zählen, ohne darauf beschränkt zu sein, Kräfte und Momente, die beim Beschleunigen des Produkts oder von Teilen des Produkts auf dieses wirken (wie etwa beim Platzieren des Produkts auf der Transporteinheit, beim Befüllen eines Produkts mit einem Füllgut, etwa beim Einströmen von Flüssigkeiten, beim Abbremsen und/oder Beschleunigen des Shuttles im Bereich der Stützstruktur).

Eine Prozesskraft kann im weiteren Sinne auch eine Gravitationskraft sein, welche in einer außergewöhnlichen Weise nur während eines Prozesses auf das Produkt einwirkt. Beispielsweise kann die Stützkraft dazu dienen, eine kurzfristige Überladung des Shuttles aufzunehmen.

In vorteilhafter Weise kann die Basis an eine Trägerstruktur montiert sein, an welcher zumindest ein Stator montiert ist. Andererseits kann an die Basis auch eine anderen Trägerstruktur angeordnet sein, die mit dem Stator nicht in direkten Kontakt steht.

In vorteilhafter Weise kann die Stützstruktur berührungslos auf die Transporteinheit einwirken. Dies verhindert Reibungsverluste und eine durch Reibung entstehende Abnutzung der Transporteinheit. Die berührungslose Einwirkung kann beispielsweise elektromagnetisch (z.B. mittels zusätzlicher Spulenanordnungen), magnetisch (z.B. durch Permanentmagnete) oder pneumatisch (z.B. durch auf die Transporteinheit gerichtete Luftdüsen) erfolgen.

In vorteilhafter Weise kann die Stützstruktur eine Stützspulenanordnung aufweisen, welche auf eine Antriebsmagnetanordnung und/oder auf eine Stützmagnetanordnung der Transporteinheit einwirkt. Dadurch kann die auf die Transporteinheit aufgebrachte Magnetkraft während der Bearbeitung des Produkts in der Stützlage gezielt und in einer geregelten Weise erhöht werden.

In einer weiteren vorteilhaften Ausgestaltung kann die Stützstruktur eine gleithemmende Formstruktur aufweisen, welche insbesondere eine Auflagematte, einen Rahmen und/oder zumindest eine Erhebung aufweist. Dies stellt eine besonders einfache, kostengünstige und effektive Lösung dar.

Die Stützstruktur kann gegebenenfalls eine Gleitstruktur aufweisen, welche insbesondere zumindest eine Profilschiene, eine Schienenführung, eine Seitenführung und/oder eine Gleitfläche aufweisen kann. Dadurch kann die Einheit aus Transporteinheit und Produkt während der Bearbeitung weiterhin (in eingeschränkter Weise) an der Stützstruktur gleitend bewegt werden, wobei die Bewegung auf die Bearbeitung abgestimmt ist.

In vorteilhafter Weise kann die Stützstruktur eine Führungsstruktur ausbilden, in welche eine an der Transporteinheit angeordnete Halteanordnung in Eingriff bringbar ist. Dadurch kann eine von der Form der Transporteinheit unabhängige Stützstruktur geschaffen werden, wobei unterschiedliche Transporteinheiten mit der Halteanordnung ausgestattet werden können.

In einer weiteren vorteilhaften Ausgestaltung kann die Führungsstruktur eine Linearführung ausbilden, in welcher ein Gleitelement der Halteanordnung gleitend in Eingriff bringbar ist. Dies erlaubt der Transporteinheit wiederum eine geführte Bewegung während der Bearbeitung.

Die gegenständliche Offenbarung betrifft weiters eine Bearbeitungsstation zur Bearbeitung eines Produkts, welches an einer Transporteinheit eines Planarmotors anordenbar ist, wobei bei der Bearbeitung zumindest eine Prozesskraft auf das Produkt einwirkt, die über das Produkt an die Transporteinheit übertragen wird, wobei die Bearbeitungsstation zumindest eine hierin beschriebene Stützstruktur aufweist und wobei die Transporteinheit während der Bearbeitung in zumindest einer Stützlage anordenbar ist.

In vorteilhafter Weise kann die Prozesskraft eine von einem Werkzeug aufgebrachte Kraft, eine magnetische oder elektromagnetische Kraft, eine Trägheitskraft, ein von solchen Kräften bewirktes Moment oder eine Kombination solcher Kräfte sein.

In einem weiteren Aspekt betrifft die gegenständliche Offenbarung einen Planarmotor mit zumindest einer hierin offenbarten Bearbeitungsstation und/oder einer hierein offenbarten Stützstruktur.

In einem weiteren Aspekt betrifft die gegenständliche Offenbarung ein Verfahren zum geregelten Antrieb einer Transporteinheit mit einem Planarmotor, welcher mit zumindest einer hierein offenbarten Stützstruktur und/oder Bearbeitungsstation ausgestattet ist, wobei das Verfahren die folgenden Schritte aufweist: schwebendes Bewegen der Transporteinheit mittels zumindest eines Stators des Planarmotors in eine Stützlage, Aufbringen von zumindest einer Prozesskraft, welche auf ein an der Transporteinheit angeordnetes Produkt einwirkt und auf die Transporteinheit übertragen wird, Aufbringen von zumindest einer Stützkraft über die Stützstruktur auf die Transporteinheit, wobei die Stützkraft der zumindest einen Prozesskraft entgegenwirkt, und schwebendes Bewegen der Transporteinheit mittels des zumindest einen Stators des Planarmotors aus der Stützlage heraus.

Als "schwebend" wird im Zusammenhang mit der gegenständlichen Offenbarung eine Anordnung der Transporteinheit bezeichnet, bei der zwischen einer Antriebsmagnetanordnung der Transporteinheit und einer Transportebene eines Stators ein Luftspalt verbleibt und Stator und Transportebene berührungslos sind.

Als "Prozesskräfte" werden im Zusammenhang mit der gegenständlichen Offenbarung sowohl Kräfte als auch Momente bezeichnet, die lediglich während einer bestimmten Bewegung und/oder Beschleunigung der Transporteinheit und/oder während einer Bearbeitung in einer Bearbeitungsstation auf die Transporteinheit und/oder das Produkt einwirken. Zu den Prozesskräften zählen auch Trägheitskräfte, die sich aus einer Bewegung der Transporteinheit 4 und/oder des Produkts 3 während der Bearbeitung ergeben.

Prozesskräfte können beispielsweise durch eine mechanische Einwirkung auf das Produkt aufgebracht werden, sie können jedoch auch berührungslos auf das Produkt einwirken, wie dies etwa bei pneumatischen Düsen oder Magneten der Fall sein kann. Analog ist diese Definition hierin auch auf alle anderen beschriebenen Kräfte und Momente anzuwenden, insbesondere die Stützkräfte.

Die gegenständliche Erfindung wird nachfolgend unter Bezugnahme auf die Figuren 1 bis 14 näher erläutert, die beispielhaft, schematisch und nicht einschränkend vorteilhafte Ausgestaltungen der Erfindung zeigen. Dabei zeigt
Fig.1 eine schaubildliche und schematisierte Darstellung eines Planarmotors mit einer Bearbeitungsstation,
Fig. 2 eine Darstellung eines Planarmotors mit einer Bearbeitungsstation gemäß einer weiteren Ausgestaltung in einer schematisierten Seitenansicht,
Fig. 3 eine schematische Darstellung eines Planarmotors und einer Bearbeitungsstation gemäß einer weiteren Ausführungsform in einer Draufsicht,
Fig. 4 bis 12 zeigen jeweils eine Bearbeitungsstation mit unterschiedlich ausgebildeten Stützstrukturen beziehungsweise Transporteinheiten in jeweils einer schematisierten Darstellung,
Fig. 13 zeigt eine weitere Ausführungsform einer Bearbeitungsstation in einer schematisierten Darstellung und
Fig. 14a und 14b zeigen eine Darstellung eines Planarmotors mit einer daran angeordneten Stützstruktur in einer Draufsicht und einer Seitenansicht.

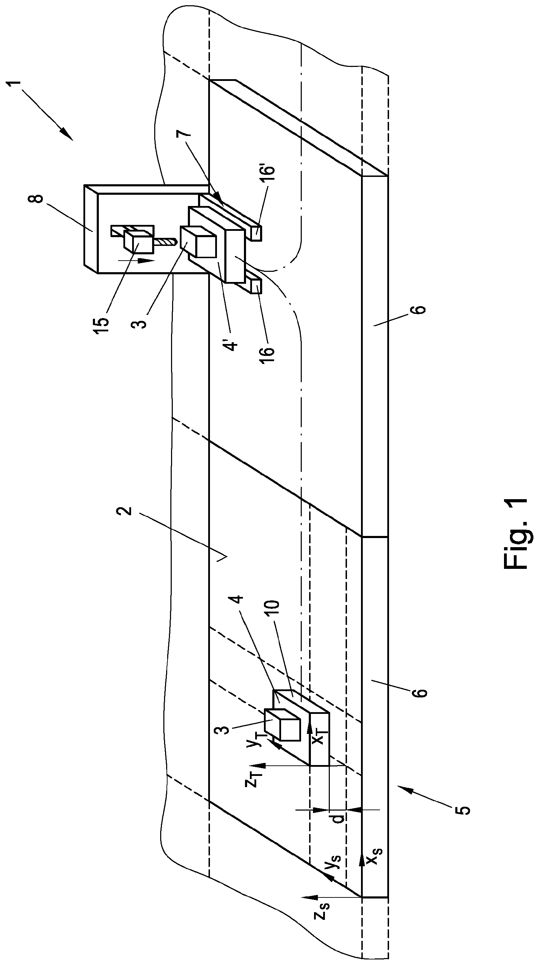

Fig. 1 zeigt eine schematische Darstellung eines Planarmotors 5 mit einer daran angeordneten Bearbeitungsstation 1. Der Planarmotor 5 weist eine ebene Anordnung von Statoren 6 auf, die eine Transportebene 2 ausbilden, an der eine Vielzahl an Transporteinheiten 4, 4' angeordnet sein können. Die Statoren 6 des Planarmotors sind üblicherweise starr zueinander und raumfest angeordnet, sodass Raumpositionen in Bezug auf die Transportebene 2 in einem raumfesten Koordinatensystem (x_{S}, y_{S}, z_{S}) angegeben werden können. Das Koordinatensystem kann beispielsweise so definiert sein, dass die Transportebene 2 in der x_{S}-y_{S}-Ebene liegt. In der Transportebene 2 können eine beliebige Anzahl an Statoren 6 angeordnet sein, die jeweils den Bewegungsraum der Transporteinheiten 4 entsprechend erweitern können. Die Achsen des raumfesten Koordinatensystems werden üblicherweise auch als erste Hauptachse xs, zweite Hauptachse ys und Hochachse zs bezeichnet. Die Bezeichnungen "erste Hauptachse", "zweite Hauptachse" und "Hochachse" dienen im Zusammenhang mit der gegenständlichen Offenbarung lediglich der Verständlichkeit der Beschreibung und sind nicht einschränkend auszulegen.

Gegebenenfalls kann für jeden Stator 6 ein eigenes Koordinatensystem definiert sein. Dies ist beispielsweise dann sinnvoll, wenn einzelne Statoren 6 in Bezug auf andere bewegbar ausgebildet sind. Beispielsweise können einzelne Statoren 6 als "Aufzüge" oder "Transportplattformen" dienen, die mitsamt den daran angeordneten Transporteinheiten 4 in unterschiedliche Positionen und/oder zwischen unterschiedlichen Transportebenen bewegt werden können, oder es kann auch ein Kippen oder Schwenken von Statoren 6 vorgesehen sein.

Die Lehren der gegenständlichen Offenbarung sind auf zahlreiche unterschiedliche Ausführungsformen von Planarmotoren 5 anwendbar und sind insbesondere nicht auf die dargestellte Variante mit einer einzigen Transportebene 2 eingeschränkt.

In jedem Stator 6 sind in an sich bekannter Weise Spulen in einer oder mehreren Schichten angeordnet, an die in geregelter Weise einzeln ein Spulenstrom angelegt werden kann, wobei die Spule dann ein Magnetfeld erzeugt. Durch eine derartige geregelte Ansteuerung der Spulen können regional begrenzt magnetische Felder erzeugt werden, deren Position und zeitlicher Verlauf innerhalb des durch die Anordnung der Statoren 6 definierten Bewegungsbereichs der Transportebene 2 verändert werden kann. Alternativ oder zusätzlich können auch bewegbare Permanentmagnete verwendet werden, die ebenfalls ein veränderliches Magnetfeld erzeugen.

An der Unterseite der Transporteinheiten 4 ist wiederum eine Antriebsmagnetanordnung 10 vorgesehen, die mit dem vom Stator erzeugten Magnetfeld zusammenwirkt. Die Antriebsmagnetanordnung 10 besteht üblicherweise aus einer flächigen Anordnung an Permanentmagneten, die ein abwechselndes Magnetmuster an Bereichen mit jeweils unterschiedlicher Polung (N/S) ausbilden. Die Antriebsmagnetanordnung 10 kann gegebenenfalls auch Elektromagnete aufweisen, falls das Magnetmuster der Antriebsmagnetanordnung 10 veränderbar sein soll. Die Ausführung des Planarmotors kann jedoch auch nach einem umgekehrten Prinzip funktionieren, wobei eine Anordnung an Permanentmagneten an der Transportebene angeordnet sind, und die Spulenanordnung an den Transporteinheiten vorgesehen sind. Es wird darauf hingewiesen, dass die gegenständliche Offenbarung nicht auf eine spezifische Ausführungsform eingeschränkt ist, sondern auf jegliche Art von Planarmotoren angewendet werden kann, sofern dem keine technischen Einschränkungen entgegenstehen und hierin nicht ausdrücklich etwas Gegenteiliges angegeben ist.

Der Transporteinheit 4 kann ein in Bezug auf die Transporteinheit 4 körperfest definiertes Koordinatensystem (x_{T}, y_{T}, z_{T}) zugeordnet werden, wobei die Position der Transporteinheit 4 in Bezug auf das raumfeste Koordinatensystem des Stators 6 (bzw. der Statoren) durch eine entsprechende Koordinatentransformation definiert werden kann.

Mit dem von dem Stator 6 erzeugten Magnetfeld wird die Transporteinheit 4 über der Transportebene 2 in Schwebe gehalten, wobei ein Luftspalt d zwischen der Transportebene 2 und der Unterseite der Transporteinheit verbleibt. Ein stabiles magnetisches Schweben wird dabei durch kontinuierliche Veränderung des magnetischen Feldes in einem geschlossenen Regelkreis ermöglicht. Dieses Prinzip wird auch als "aktives Schweben" (englisch: "electromagnetic suspension") bezeichnet.

Durch die geregelte Veränderung des Magnetfeldes kann nun die Transporteinheit nicht nur parallel zur Transportebene 2 (d.h. in Richtung der Achsen x_{S} und y_{S}) bewegt werden, sondern es ist durch Verstärken und Abschwächen des Magnetfeldes auch eine (beschränkte) Bewegung entlang der Achse z_{S} möglich, wobei sich der Luftspalt d verändert. Dadurch kann die Transporteinheit 4 entlang der Hochachse angehoben und abgesenkt werden. Weiters kann auch ein (gegebenenfalls eingeschränktes) Rotieren der Transporteinheit 4 um seine Hochachse z_{T} (gieren) möglich sein und auch eine Rotation um die erste Hauptachse x_{T} (rollen) und/oder um die zweite Hauptachse y_{T} (nicken) kann in eingeschränktem Maß möglich sein.

An der Transporteinheit können beliebige Gegenstände angeordnet sein, die im Zusammenhang mit der gegenständlichen Offenbarung allgemein und nicht einschränkend als "Produkt" bezeichnet werden. Dieser Begriff umfasst jegliche Gegenstände, die auf einer Transporteinheit 4 eines Planarmotors 5 angeordnet und damit transportiert werden können. Gegebenenfalls kann die Transporteinheit Befestigungs- und/oder Aufnahmemittel aufweisen, die die Anordnung und den sicheren Transport des Produkts erleichtern bzw. ermöglichen. Das Produkt 3 kann eine beliebige Form aufweisen und ist in Fig. 1 schematisch als würfelförmiger Gegenstand dargestellt. Zu Beispielen von Produkten, die mit einer Transporteinheit 4 eines Planarmotors 5 transportiert und in einer Bearbeitungsstation 1 bearbeitet werden können zählen Elektronikkomponenten bzw. -produkte, wie etwa Bauteile für Mikrocomputer, Mobiltelefone oder Ähnliches, Komponenten in einem Fertigungsprozess (Schrauben, Lager etc.), Flüssigkeitsbehälter (wie etwa Flaschen, Dosen, Reagenzgläser), Medikamente und Drogerieprodukte, Lebensmittel (z.B. Schnittkäse), die gegenständlichen Erfindung ist jedoch nicht auf diese beispielhaften Anwendungen beschränkt.

Für zahlreiche Anwendungen ist es erforderlich, das auf der Transporteinheit 4 angeordnete Produkt 3 zu bearbeiten. In Fig. 1 ist an einem Rand eines Stators 6 des Planarmotors 5 dazu eine Bearbeitungsstation 1 angeordnet. Die Bearbeitungsstation 1 weist eine Basis 8 auf, die neben dem Stator 6 angeordnet ist und vorzugsweise von diesem unabhängig gelagert ist. An der Basis 8 ist ein Werkzeug 15 bewegbar angeordnet, mit dem eine Bearbeitung eines Produktes 3 erfolgen kann. Der Einfachheit halber besteht das in Fig. 1 dargestellte Werkzeug aus einem einfachen Bohrer, der entlang einer Achse in Bohrrichtung bewegbar ist. Die Bearbeitungsstation 1 ist in Fig. 1 rein beispielhaft dargestellt und die hierein offenbarten Lehren können auf beliebige Arten von Bearbeitungsstationen 1 angewendet werden. Die Bearbeitungsstation kann eine beliebige verfahrenstechnische und/oder fertigungstechnische Bearbeitung durchführen. Zu Beispielen von Bearbeitungsstationen 1 zählen Stationen zur mechanischen Bearbeitung (wie etwa Bohren, Fräsen, Schneiden, Fügen, etc.), Stationen zur Assemblierung von Bauteilen (zum Beispiel fügetechnische Maßnahmen, wie etwa Klemmen, Pressen, Ziehen, Schrauben, Schweißen, Kleben, etc., oder das Verschließen von Behältern mittels Drehverschlüsseln oder (Kron-) Korken) und Stationen für verfahrenstechnische Prozesse (wie etwa Füllen, Mischen, Reinigen, etc.), die gegenständliche Erfindung ist sind jedoch nicht auf diese Bearbeitungsstationen beschränkt.

Um ein Produkt 3 in der Bearbeitungsstation 1 zu bearbeiten, wird die Transporteinheit 4, auf der sich das Produkt befindet, in eine Stützlage bewegt, die in Fig. 1 durch das Bezugszeichen 4' gekennzeichnet ist. Die Transporteinheit 4 kann das Produkt 3 schwebend in die Stützlage bewegen, dort sehr genau positionieren und das Produkt nach der Bearbeitung auch schwebend wieder aus der Stützlage herausbewegen. Insbesondere bei mechanischer Krafteinwirkung auf das Produkt 3 (also etwa beim in Fig. 1 dargestellten Bohren eines Loches oder ähnlichen Vorgängen) kann die vom Stator 6 auf die Transporteinheit aufbringbare maximale Haltekraft während der Bearbeitung unzureichend sein, um das Produkt 3 sicher und ausreichend positionsgenau in der Stützlage zu halten. Dies kann zur Folge haben, dass das Produkt 3 mitsamt der Transporteinheit 4 sich in unzulässiger Weise bewegt, während die für die Bearbeitung erforderliche Prozesskraft auf das Produkt einwirkt.

Um diese unzulässige Bewegung zu verhindern, ist im Bereich der Stützlage eine Stützstruktur 7 angeordnet, die die Einheit aus Transporteinheit 4 und Produkt 3 in zumindest einer Raumrichtung abstützt. In Fig. 1 besteht die Stützstruktur 7 aus zwei länglichen Auflageelementen 16, 16', die an der Basis 8 befestigt sind, und knapp oberhalb der Transportebene 2 in den Bewegungsraum des Planarmotors 5 hineinreichen. Die Auflageelemente 16, 16' sind ausreichend niedrig, um dem Planarmotor 5 eine schwebende Bewegung der Einheit aus Transporteinheit 4 und Produkt 3 in die Stützlage und aus dieser heraus zu ermöglichen. Diese Voraussetzung ist im Allgemeinen dann gegeben, wenn die dicke der Auflageelemente (bezogen auf die Hochachse z_{S}) geringer ist, als der maximal erreichbare Luftspalt d.

Sobald die Transporteinheit 4 in der Stützlage angelangt ist, kann sie gegebenenfalls ein wenig abgesenkt werden, bis die Transporteinheit 4 in einer definierten Position auf den Auflageelementen 16, 16' anliegt, sodass eine weitere Bewegung der Einheit aus Transporteinheit 4 und Produkt in Richtung der negativen Hochachse -z_{S} nicht mehr möglich ist. Gegebenenfalls können die Auflageelemente 16, 16' eine formschlüssige Aufnahme für die Transporteinheit 4 ausbilden, sodass Stützkräfte nicht nur in Richtung der Hochachse aufgebracht werden, sondern auch Stützkräfte und/oder Stützmomente in anderen Raumrichtungen.

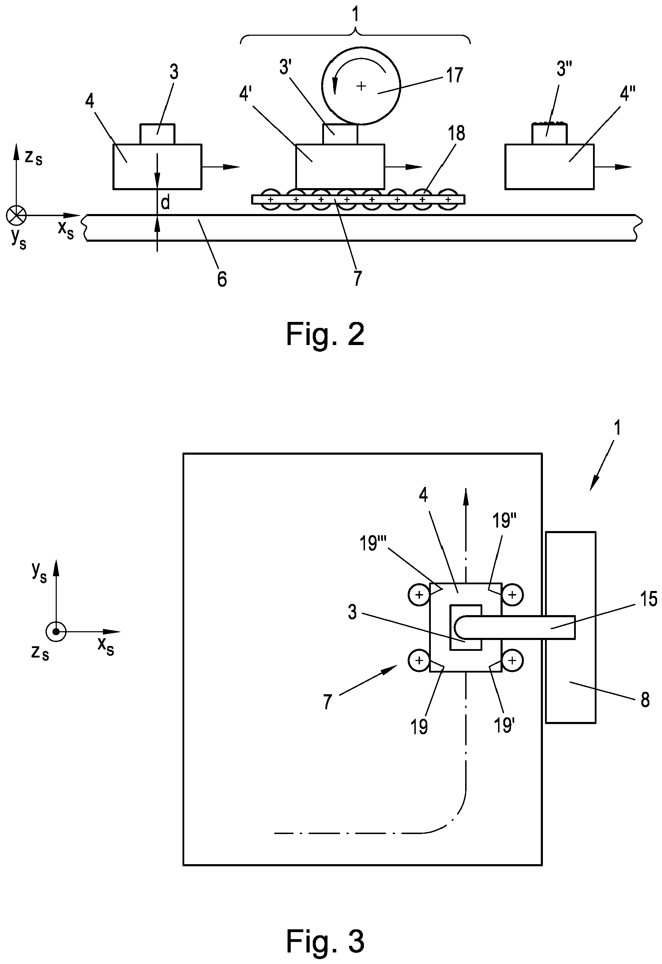

Fig. 2 zeigt ein weiteres Beispiel für eine Bearbeitungsstation 1. Dabei wird ein Produkt 3 mit einer Walzenanordnung 17 bearbeitet, während das Produkt von der Transporteinheit 4 in einer auf die Walzengeschwindigkeit abgestimmten Bewegung unter der Walzenanordnung 17 hindurchbewegt wird. Die Walzenanordnung kann beispielsweise Teil eines Druckwerkes sein oder eine Prägewalze aufweisen, die eine Oberseite des Produkts 3 bedruckt bzw. mit einer Prägung versieht. Die Einheit aus Transporteinheit 4 und Produkt 3 wird aus einer ersten in Fig. 2 dargestellten Position (Bezugszeichen 3, 4) vom Stator 6 schwebend in die Bearbeitungsstation 1 bewegt (Bezugszeichen 3', 4'), wobei die Transporteinheit 4 dabei mit ihrer Unterseite an einer Stützstruktur 7 in Anlagerung gelangt, die in diesem Fall als Rollenanordnung 18 ausgebildet ist. Während sich die Einheit aus Transporteinheit 4 und Produkt 3 im Bereich der Bearbeitungsstation 1 befindet, erlaubt die Rollenanordnung 18 zwar eine weitere Geradeausbewegung in Richtung der ersten Hauptachse x_{S}, eine Bewegung in Richtung der negativen Hochachse -z_{S} wird jedoch durch die Stützstruktur 7 wiederum verhindert. Die als Rollenanordnung 18 ausgebildete Stützstruktur 7 nimmt in diesem Fall die von der Walzenanordnung 17 auf das Produkt 3 aufgebrachte Andruckkraft (bzw. Prozesskraft) auf.

In einer alternativen Ausführungsform kann anstelle der Rollenanordnung 18 eine beliebige Wälz- oder Gleitlageranordnung, beispielsweise eine Kugellageranordnung vorgesehen sein, welche auf die Transporteinheit 4 eine Stützkraft nur entlang der Hochachse aufbringt und eine Bewegung sowohl in Richtung der ersten Hauptachse xs, als auch der zweiten Hauptachse y_{S}, als auch eine Rotation um die Hochachse z_{S} im Wesentlichen nicht beeinträchtigt. Gegebenenfalls kann der Bearbeitungsvorgang durch die Bewegung der Transporteinheit 4 in Bezug auf die Bearbeitungsstation 1 geregelt werden, etwa indem die Bewegung der Transporteinheit 4 ein bestimmtes Bearbeitungsmuster erzeugt.

In den in Fig. 1 und Fig. 2 dargestellten Beispielen wird jeweils eine Prozesskraft aufgebracht (und von der Stützstruktur 7 aufgenommen), die im Wesentlichen normal auf die Transportebene 2 ausgerichtet ist, d.h. entlang der negativen Hochachse -z_{S} wirkt. Die Stützstruktur 7 kann jedoch auch ausgebildet und angeordnet sein, um die Bewegung der Einheit aus Transporteinheit 4 und Produkt 3 in einer oder mehreren anderen Richtungen oder auch rotatorisch in nahezu beliebiger Weise zu beschränken.

Die gegenständliche Offenbarung ist nicht auf die in den Figuren dargestellten Prozesskräfte eingeschränkt. Vielmehr können unter Berücksichtigung der hierin offenbarten Lehren beliebige Stützstrukturen 7 geschaffen werden, um einer Vielzahl unterschiedlicher Prozesskräfte entsprechende Stützkräfte entgegenzusetzen. Beispielsweise können Magnetkräfte auf das Produkt 3 und/oder die Transporteinheit 4 einwirken, oder es können Trägheitskräfte wirken. Prozesskräfte können beispielsweise durch eine beliebige Beschleunigung der Transporteinheit 4, durch ein Be- oder Entladen des Produkts oder durch eine Einwirkung von Materialströmen entstehen. Beispielsweise können Produkte in einem Luftstrom getrocknet werden, der am Produkt eine Strömungskraft erzeugt, die eine Prozesskraft darstellt. Anhand der hierin offenbarten Lehren können Stützstrukturen zur Aufnahme beliebiger solcher Prozesskräfte geschaffen werden.

Fig. 3 zeigt eine weitere beispielhafte Anordnung einer Bearbeitungsstation 1 an einem Stator 6 eines Planarmotors 5. Die Bearbeitung weist wiederum ein Werkzeug 15 auf, welches auf ein Produkt 3 wirkt, das auf einer Transporteinheit 4 angeordnet ist. Das Werkzeug 15 bringt dabei ein um die z_{T}-Achse wirkendes Drehmoment auf das Produkt 3 auf. (Eine derartige, als Moment wirkende Prozesskraft kann beispielswese beim Einbringen einer Schraube oder beim Aufschrauben eines Deckels auf einen Behälter aber auch bei zahlreichen anderen Bearbeitungsschritten wie Bohren oder Fräsen entstehen). Die Stützstruktur 7 sorgt in diesem Fall dafür, dass das vom Werkzeug 15 aufgebrachte Drehmoment weder das Produkt 3, noch die Transporteinheit 4 aus seiner Lage dreht. Die Stützstruktur 7 weist dazu mehrere (im dargestellten Fall vier) Stützpunkte 19-19''' auf, die jeweils an zwei gegenüberliegenden Seiten der Transporteinheit 4 diese abstützen, während sich die Transporteinheit in der Stützlage befindet. Die Stützstruktur 7 verhindert in dem Fall nicht nur eine Drehung um die Hochachse z_{S}, sondern auch eine Bewegung entlang der ersten Hauptachse x_{S}. Die Stützpunkte 19 können beispielsweise als Rollen oder Kugelförmig ausgebildet sein oder eine andere Form aufweisen, die eine im Wesentlichen punktförmige Abstützung der Transporteinheit 4 erlaubt. Als "im Wesentlichen punktförmige Abstützung" wird im Zusammenhang mit der gegenständlichen Offenbarung eine Abstützung bezeichnet, die einem Gegenstand, der mit einer geraden Fläche an dieser Abstützung angelagert ist, ein Schwenken um zumindest eine Achse dieser Abstützung erlaubt.

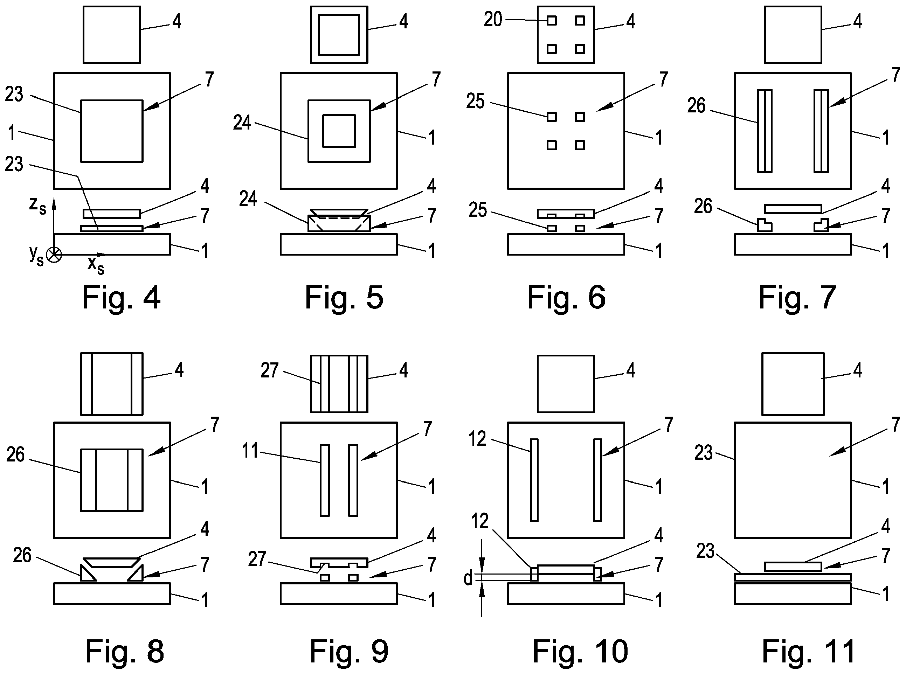

In Fig. 4 bis Fig. 12 sind unterschiedliche Ausführungsformen von Stützstrukturen 7 dargestellt, wobei jeweils untereinander eine schematisierte Unteransicht einer Transporteinheit 4, eine Draufsicht auf einen Bereich der Bearbeitungsstation 1 mit der Stützstruktur 7 und eine Seitenansicht dieses Bereichs der Bearbeitungsstation 1 dargestellt sind. Die in der folgenden Beschreibung vorgenommenen Richtungsangaben beziehen sich jeweils auf das dargestellte Koordinatensystem. Dies dient rein der besseren Verständlichkeit und Beschreibbarkeit und ist nicht einschränkend auszulegen. So können die jeweiligen Stützstrukturen insbesondere auch unter einem anderen Winkel angeordnet werden, wenn dies für den Fall erforderlich und technisch sinnvoll ist.

Fig. 4 zeigt eine Transporteinheit 4 mit einer im Wesentlichen quadratischen Grundfläche und im Wesentlichen konstanter Dicke, etwa in Form eines Quaders. Im Bereich der Bearbeitungsstation 1, in dem die Transporteinheit 4 von dem Stator 6 zur Bearbeitung positioniert werden soll, ist eine Stützstruktur 7 in Form einer im Wesentlichen quadratischen Auflagematte 23 vorgesehen. Die Auflagematte 23 kann beispielsweise an einer flachen Halterung angeordnet sein, die an einer Basis 8 montiert ist, sodass Prozesskräfte, die auf die Stützstruktur 7 wirken, nicht über den Stator 6, sondern direkt an die Basis 8 abgeleitet werden. (Eine Basis 8 ist in Fig. 4 nicht dargestellt, diese kann aber analog zur in Fig. 1 dargestellten Basis ausgeführt sein). Die Auflagematte 23 kann aus einem unmagnetischen Material bestehen, beispielsweise aus einem Kunststoff oder einem Gummimaterial. Vorzugsweise ist die Grundfläche der Auflagematte 23 etwas größer als die Transporteinheit 4, um diese optimal zu stützen (dies ist allerdings keine zwingende Voraussetzung). Mit einem geringen Reibungskoeffizienten des Materials gegenüber der Transporteinheit 4 (glatte Oberfläche) kann die Auflagematte die mittels Prozesskräften daran angedrückte Transporteinheit 4 (im Wesentlichen) nur in Richtung der Hochachse z_{S} stützen, d.h. eine reine Stützkraft in dieser Richtung entfalten. Andererseits kann die Auflagematte 23 auch einen hohe Reibungskoeffizienten aufweisen (und zum Beispiel als Gummimatte ausgeführt sein), wobei die Bewegung der Transporteinheit 4 durch die Reibung dann auch in anderen Richtungen gestützt wird. Gegebenenfalls kann eine Gleitoberfläche auch richtungsabhängige Gleit- bzw. Hafteigenschaften aufweisen.

Fig. 5 zeigt eine Transporteinheit 4 mit einer im Wesentlichen quadratischen Grundfläche, wobei jedoch die Seitenflächen abgeschrägt sind, sodass der horizontale (d.h. in x_{T}-y_{T}-Ebene betrachtete) Querschnitt der Transporteinheit 4 sich zum Stator hin verjüngt. Im Bereich der Bearbeitungsstation 1, in dem die Transporteinheit 4 von dem Stator 6 zur Bearbeitung positioniert werden soll, ist eine Stützstruktur 7 in Form eines rechteckigen Rahmens 24 vorgesehen, wobei die Ränder des Rahmens 24 einen dreieckigen Querschnitt aufweisen. Der Rahmen 24 bildet eine zum Rahmeninneren hin gerichtet schräge Auflagefläche aus, deren Neigung und Form passend zur Abschrägung der Transporteinheit 4 ausgebildet ist. Dadurch kann die Transporteinheit 4 durch den Stator über den Rahmen 24 bewegt und dann abgesenkt werden, bis die Transporteinheit 4 mit ihren Abschrägungen formschlüssig an der Auflagefläche des Rahmens 24 anliegt. Durch die formschlüssige Aufnahme werden die Freiheitsgrade der Transporteinheit 4 im Wesentlichen vollständig eingeschränkt, wobei lediglich eine translatorische Bewegung in Richtung der positiven Hochachse z_{T} möglich ist, um die Transporteinheit 4 (mithilfe des Stators) anzuheben und schwebend aus der Bearbeitungsstation heraus zu bewegen.

Fig. 6 zeigt eine Transporteinheit 4 in deren Unterseite (d.h. deren zum Stator hin gerichtete Oberfläche) Ausnehmungen 20 vorgesehen sind, die ein formschlüssiges "aufsetzen" der Transporteinheit auf der Stützstruktur 7 erlaubt. Die Stützstruktur 7 weist dazu mehrere quaderförmige Erhebungen 25 auf, die zu den Ausnehmungen 20 passend ausgebildet sind.

Fig. 7 zeigt eine im Wesentlichen quaderförmige Transporteinheit 4. Die Stützstruktur 7 weist zwei längliche Profilschienen 26 auf, die parallel zueinander angeordnet sind. Die Profilschienen 26 weisen einen im Wesentlichen L-förmigen Querschnitt auf, wobei die Entfernung (in x_{S}-z_{S}-Ebene betrachtet) der beiden Kehlwinkel der Profilschienen 26 auf die Transporteinheit 4 abgestimmt ist und eine formschlüssige Aufnahme der Transporteinheit 4 erlaubt. Die Bewegung der Transporteinheit wird durch die Profilschienen 26 (neben der Stützwirkung in Richtung der Hochachse) gegen eine Verschiebung in Richtung der ersten Hauptachse x_{S} gesichert, wobei eine Bewegung entlang der zweiten Hauptachse y_{S} weiterhin möglich ist (sofern keine nicht mit der zur Verfügung stehenden Kraftwirkung überwindbaren Reibungskräfte dies verhindern).

Fig. 8 zeigt eine Bearbeitungsstation 1 mit einer Stützstruktur 7, die wiederum zwei parallele Profilschienen 26 aufweist. Die Profilschienen 26 weisen in dem Fall einen dreieckigen Querschnitt auf, sodass zwei gegenüberliegende schräge Auflageflächen gebildet sind, an denen die Transporteinheit 4 angelagert werden kann. Gegebenenfalls kann die Transporteinheit 4 zumindest zwei gegenüberliegende abgeschrägte Seitenflächen aufweisen, sodass eine formschlüssige Anlagerung an die Profilschienen 26 möglich ist. Beispielsweise kann jedoch auch eine Transporteinheit 4 in der in Fig. 5 dargestellten Form an dieser Stützstruktur formschlüssig angelagert werden.

Fig. 9 zeigt eine Transporteinheit 4, in welcher Ausnehmungen vorgesehen sind. In dem Fall sind zwei Ausnehmungen vorgesehen, die zwei parallel über die gesamte Unterseite der Transporteinheit verlaufende Rillen 27 ausbilden. (Als "Unterseite" wird in diesem Zusammenhang wiederum die zum Stator gerichtete Oberfläche bezeichnet, unabhängig von der tatsächlichen Ausrichtung der Transporteinheit 4 und der Transportebene 2 des entsprechenden Stators 6). Die Stützstruktur 7 weist zwei parallele Schienenführungen 11 mit rechteckigem Querschnitt auf, deren Abstand dem Abstand der Ausnehmungen 20 entspricht. Die in den Ausnehmungen 20 angeordneten Schienenführungen 11 verhindern zumindest eine Bewegung quer zur Schienenachse und auch eine Rotation um die erste Hauptachse z_{S} ist unterbunden. Auch eine Bewegung entlang der zweiten Hauptachse y_{S} ist möglich.

Bei den in Fig. 4-9 dargestellten Ausführungsformen kann die Stützstruktur 7 auch oberhalb oder seitlich der Transporteinheit angeordnet sein, sodass auch Kräfte in positiver z-Richtung bzw. seitlich wirkende Kräfte aufgenommen werden können. Dadurch können beispielsweise auch Prozesskräfte abgeleitet werden, die nach oben oder seitlich gerichtet sind. Dies hat außerdem den Vorteil, dass die minimale Dicke der Stützstruktur nicht auf den maximalen Luftspalt (oder weniger) beschränkt ist.

Fig. 10 zeigt eine Stützstruktur 7, die zwei parallele Seitenführungen 12 aufweist. Die Seitenführungen 12 weisen einen auf die Breite der Transporteinheit 4 abgestimmten Abstand auf, wobei die zwischen den Führungen angeordnete Transporteinheit 4 auf eine Bewegung in Richtung der Seitenführungen 12 beschränkt ist, wobei jedoch die Höhe, d.h. der Luftspalt durch Anheben und Absenken der Transporteinheit in Richtung der Hochachse zs weiterhin verändert werden kann. Auch eine Bewegung entlang der zweiten Hauptachse ys ist möglich.

Fig. 11 zeigt eine Bearbeitungsstation 1 mit einer Stützstruktur 7 in Form einer Auflagematte 23. Die Auflagematte 23 weist eine Oberfläche auf, die deutlich größer ist, als die Grundfläche der Transporteinheit 4. Dadurch kann die Transporteinheit 4 in unterschiedlichen Positionen an der Auflagematte 23 angelegt werden. Andererseits kann diese Stützstruktur von Transporteinheiten 4 unterschiedlicher Größe genutzt werden. Gegebenenfalls kann die Oberfläche der Auflagematte 23 auch als Gleitfläche ausgeführt sein, wobei die Gleiteigenschaften entweder konstant oder veränderlich sein können. Beispielsweise kann die Auflagematte 23 eine richtungsabhängige Gleitfähigkeit aufweisen oder es können nur bestimmte Bereiche ein Gleiten zulassen, etwa ein Gleiten über eine bestimmte Bahn, die an der Oberfläche der Auflagematte 23 vorgesehen ist. Die Auflagematte 23 kann wiederum an einer in Fig. 11 nicht dargestellten Basis 8 befestigt sein (dieses Merkmal ist auch auf die anderen hierein dargestellten Stützstrukturen 7 anwendbar), sodass die Statoroberfläche sowohl von Prozesskräften, als auch von Stützkräften geschont bleibt.

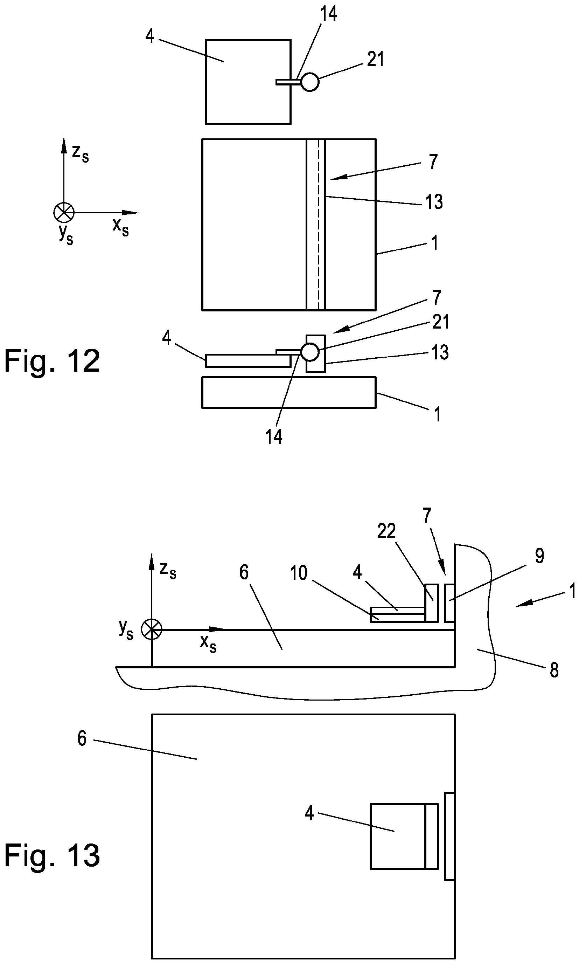

Fig. 12 zeigt eine Bearbeitungsstation 1 mit einer Stützstruktur 7 in Form einer Führungsstruktur 13. An der Transporteinheit 4 ist eine Halteanordnung 14 mit einem Gleitelement 21 befestigt, welches mit der Führungsstruktur 13 in Eingriff bringbar ist. Das Gleitelement 21 wird in der Führungsstruktur 13 in der Art einer Linearführung gleitend geführt. In der in Fig. 21 dargestellten Ausführungsform ist das Gleitelement 21 kugelartig ausgebildet, wobei die Führungsstruktur 13 eine parallel zur Transportebene 2 verlaufende zylindrische Ausnehmung aufweist, in der das kugelige Gleitelement 21 passend aufgenommen ist. Dies erlaubt der Transporteinheit 4 eine Rotation um die Kugelmitte des Gleitelements 21 in allen rotatorischen Freiheitsgraden, eine translatorische Bewegung der Transporteinheit 4 ist jedoch nur entlang der von der Führungsstruktur 13 definierten Linearführung möglich.

Alternativ können die Halteanordnung 14 (bzw. dessen Gleitelement 21) und die Führungsstruktur 13 auch andere aufeinander abgestimmte Formen aufweisen, wobei beispielsweise auch eine Rotation um eine oder mehrere Achsen durch die formschlüssige Aufnahme des Gleitelements 21 in der Führungsstruktur 13 eingeschränkt werden kann. Die Auswahl und Gestaltung entsprechender Ausbildungsformen liegen, bei Kenntnis der hierin offenbarten Lehren, im Können des Durchschnittsfachmanns.

In allen oben beschriebenen Ausführungsformen können die Oberflächen der Stützstruktur 7 entweder einen hohen Reibungskoeffizienten aufweisen, sodass Prozesskräfte auch mithilfe der Reibung aufgenommen werden können, oder sie können als Gleitflächen ausgebildet sein, sodass allfällige Reibungskräfte minimiert werden. Gleitoberflächen können auch unterschiedliche Gleiteigenschaften aufweisen, etwa wie dies obenstehend in Bezug auf einzelne Ausführungsformen beschrieben ist. Die Gleitoberflächen können auch richtungsabhängige Reibungseigenschaften haben, sodass beispielswese eine Bewegung nur in einer Richtung bei geringer Reibung möglich ist. Gegebenenfalls können zusätzliche Lagerelemente, wie etwa Rollen oder Kugellager, vorgesehen sein, um eine Gleitreibung zwischen Transportelement 4 und Stützstruktur 7 zu minimieren. Die Stützstruktur kann gegebenenfalls auch berührungslose erfolgen, etwa mittels Luftlager und/oder passiven Magnetlagern und/oder aktiven Magnetlagern.

Je nach Ausführungsform und Einsatzbereich können die Stützstrukturen 7 aus unterschiedlichen Materialien hergestellt sein, beispielsweise aus Metallen, Kunststoffen, Gummimaterialien oder Kombinationen aus solchen und ähnlichen Materialien. Der Durchschnittsfachmann ist bei Kenntnis der hierin offenbarten Lehren von sich aus in der Lage, geeignete Materialkombinationen durch routinemäßige Arbeiten und Versuche sinnvoll auszuwählen und dabei die erwähnten Nebenbedingungen zu berücksichtigen.

Fig. 13 zeigt eine weitere Ausführungsform einer Stützstruktur 7, wobei die Stützkräfte berührungslos auf die Transporteinheit 4 aufgebracht werden können. Die Transporteinheit 4 weist dazu neben der üblichen Antriebsmagnetanordnung 10, die mit dem Stator 6 des Planarmotors 5 zusammenwirkt, eine Stützmagnetanordnung 22 auf, die in dem dargestellten Fall an einer Seite der Transporteinheit 4 normal auf die Antriebsmagnetanordnung 10 (d.h. parallel zur Hochachse z_{T}) angeordnet ist. Als Stützstruktur 7 ist oberhalb des Stators 6 an einer Basis 8 eine Stützspulenanordnung 9 angeordnet, die unabhängig vom Stator 6 angesteuert werden kann und ein Magnetfeld erzeugt, welches auf die Stützmagnetanordnung 22 wirkt, wenn die Transporteinheit 4 in der dargestellten Stützlage angeordnet ist, bzw. sich in diesem Bereich bewegt. Gegebenenfalls kann anstelle einer Stützspulenanordnung 9 auch eine (passive) Stützmagnetanordnung vorgesehen sein. In Fig. 13 ist die Stützspulenanordnung 9 in einer Ebene parallel zur Hochachse z_{S} (d.h. normal auf die Transportebene 2) angeordnet. Die Stützspulenanordnung 9 kann jedoch auch parallel zum Stator 6, beispielsweise unter- oder oberhalb des Stators 6 angeordnet sein und das vom Stator 6 erzeugte Magnetfeld im Bereich der Bearbeitungsstation 1 gezielt verstärken. Auch kann das von der Stützspulenanordnung 9 erzeugte Magnetfeld auf die Antriebsmagnetanordnung 10 wirken, sodass an der Transporteinheit 4 keine zusätzliche Stützmagnetanordnung 22 vorgesehen sein muss. Mit der Stützspulenanordnung 9 können die Prozesskräfte über die Transporteinheit 4 berührungsfrei an die Basis abgeleitet werden, indem zusätzliche Magnetkräfte an die Transporteinheit 4 angelegt werden, die den Prozesskräften entgegenwirken. Die praktischen Möglichkeiten sind durch die gewählte Form und Ausführung der Stützspulenanordnung 9 und/oder der Stützmagnetanordnung 22 auf vielfältige Weise variierbar.

Anstelle der Stützspulenanordnung 9 oder zusätzlich dazu kann auch eine Düsenanordnung (nicht dargestellt) vorgesehen sein, welche ein Fluid ausstößt, wobei der Fluidstrom auf die Transporteinheit 4 gerichtet ist und an diesem eine Kraftwirkung entfaltet.

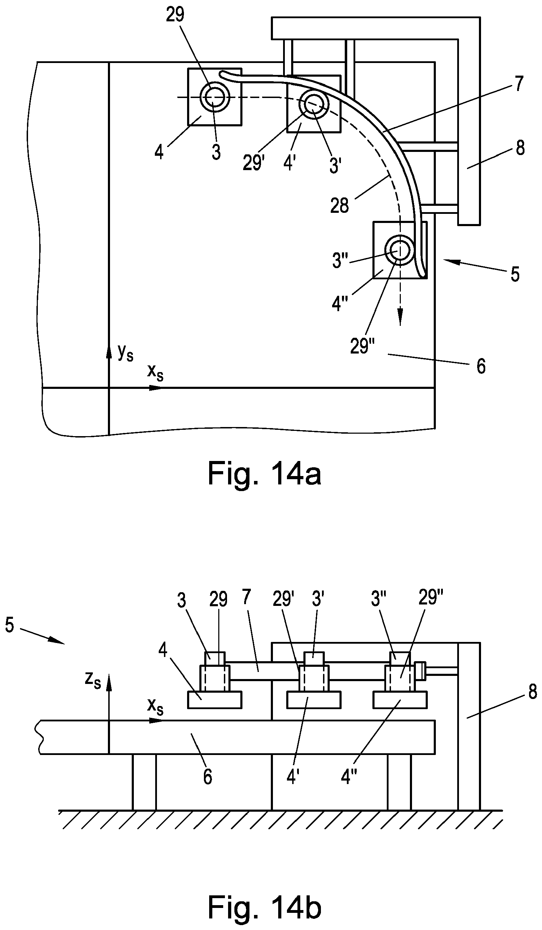

In Fig. 14a und 14b ist ein Planarmotor 5 gemäß einer weiteren Ausführungsform dargestellt. Auf einem Stator 6 des Planarmotors 5 sind drei Transporteinheiten 4, 4', 4" dargestellt, die vom Stator schwebend 6 entlang einer gekrümmten Bewegungsbahn 28 bewegt werden. Die Bewegungsbahn 28 beschreibt im Wesentlichen eine Kurve um 90° mit konstantem Radius. Aufgrund der Richtungsänderung wirken in der Kurve Trägheitskräfte auf die Transporteinheiten 4, 4', 4" und die von den Transporteinheiten 4, 4', 4" transportierten Produkte 3, 3', 3". Die Transporteinheiten 4, 4', 4" weisen jeweils ringartig ausgebildete Aufnahmen 29, 29', 29" in denen die (im Wesentlichen zylindrischen) Produkte 3, 3', 3" abgestellt und gehalten sind. Bei höheren Geschwindigkeiten können diese Trägheitskräfte vom Stator 6 nicht mehr in ausreichender Weise ausgeglichen werden. In diesem Fall könnten die Transporteinheiten 4, 4', 4" "aus der Bahn" geschleudert werden, oder in unzulässiger Weise kippen und dabei unsteuerbar werden. Zweiteres ist insbesondere bei Produkten 3, 3', 3" zu befürchten, die einen hohen Schwerpunkt haben. Gegebenenfalls könnte sich auch ein Produkt 3 aufgrund der Trägheit aus seiner Aufnahmen 29 lösen und von der Transporteinheit 4 stürzen. In Fig. 14a und 14b sind die Produkte 3, 3', 3" zylinderförmig ausgebildet. Praktisch könnte es sich beispielsweise um Gefäße oder Fläschchen handeln, die stehend auf den Transporteinheiten 4, 4', 4" (bzw. in einer entsprechenden Aufnahmen 29, 29', 29" der jeweiligen Transporteinheit 4, 4', 4") angeordnet sind. Um den Transporteinheiten 4, 4', 4" eine gefahrlose Kurvenfahrt auch mit hohen Geschwindigkeiten zu ermöglichen, ist eine Stützstruktur 7 vorgesehen, die an einer Basis 8 befestigt ist und über den Flächenbereich des Stators 6 angeordnet ist, um die Transporteinheiten 4, 4', 4" (und somit das Produkt 3, 3', 3") während der Kurvenfahrt zu stützen. Die Transporteinheit fährt geradlinig auf die Stützstruktur zu (Transporteinheit 4), bis die auf der Transporteinheit 4 angeordnete Aufnahme 29, 29', 29" vor Beginn der Kurve in Anlagerung mit der Stützstruktur 7 gelangt. Während der Kurvenfahrt gleitet 'die Aufnahme 29 an der Stützstruktur 7, bis die Kurve endet und die Transporteinheit wieder in eine gerade Fahrt übergeht (Transporteinheit 4"). Alternativ oder zusätzlich kann die Stützstruktur 7 auch an dem Produkt 3 in Anlagerung gelangen und dieses stützen. In ähnlicher Weise kann eine Stützstruktur 7 auch als Absturzsicherung für die Transporteinheit 4 vorgesehen sein. Gegebenenfalls kann anstelle der in Fig. 14 dargestellten Gleitfläche, an der die Aufnahmen 29 in Anlagerung gelangt, an der Stützstruktur 7 auch eine Rollenanordnung oder ähnliches vorgesehen sein, um Reibungskräfte zwischen der Stützstruktur 7 und der Aufnahmen 29 (bzw. der Transporteinheit 4) zu minimieren.

Alternativ kann eine Stützstruktur 7 die Transporteinheit 4 (bzw. die Aufnahme 29 und/oder das Produkt 3) auch zum Ausgleich von Gravitationskräften stützen, also beispielsweise in Richtung der Hochachse z bei eben angeordneten Statoren, etwa um über definierte Streckenbereiche die Aufnahme und den Transport von Lasten zu ermöglichen, die ohne Stützstruktur 7 die Tragekapazität der Transporteinheit 4 übersteigen würden. Entsprechende Stützstrukturen 7 sind dabei bevorzugter Weise an einer Basis 8 angeordnet und unabhängig von den Statoren 6 befestigt, d.h. dass die Stützkräfte, die von der Stützstruktur 7 aufgenommen werden, nicht über die Transporteinheit 4 auf den Stator 6 wirken, sondern direkt an die Basis 8 abgegeben werden, ohne den Stator 6 (insbesondere hinsichtlich dessen mechanischer Belastbarkeit) zu beeinträchtigen. Auch bei vertikal angeordneten Statoren 6 können Stützstrukturen 7 zur Aufnahme von Gravitationskräften vorgesehen sein, die dann parallel zur Transportebene verlaufen.

Bei allen hierein beschriebenen Ausführungsformen kann üblicherweise (jedoch nicht notwendiger Weise) das Produkt 3 fest mit der Transporteinheit 4 verbunden sein. Beispielsweise kann das Produkt 3 formschlüssig in einer Aufnahme der Transporteinheit 4 angeordnet und/oder gegebenenfalls mit entsprechenden Befestigungsmitteln daran befestigt sein. Zwischen dem Produkt 3 und der Transporteinheit 4 bestehen dann keine für den Transport oder die Bearbeitung relevanten inneren Freiheitsgrade. Die Einheit aus Transporteinheit 4 und Produkt 3 kann dann im Wesentlichen als festkörperliche Einheit betrachtet werden. Eine Beschränkung der Freiheitsgrade des Produkts 3 durch eine auf das Produkt wirkende Stützkraft beschränkt daher die Freiheitsgrade der Transporteinheit 4 in dem Fall praktisch in der selben Weise, als würde die Stützkraft direkt auf die Transporteinheit 4 einwirken. Andererseits kann das Produkt 3 auch in einer Weise an der Transporteinheit 4 befestig sein, die eine eingeschränkte Relativbewegung zur Transporteinheit 4 erlaubt. Beispielsweise kann die Transporteinheit 4 eine schwenkbare Befestigung für Flüssigkeitsbehälter aufweisen, sodass diese stets mit der Öffnung nach oben transportiert werden.

Alle obenstehend beschriebenen Ausführungsformen wurden anhand der Ausrichtung und Anordnung beschrieben, wie sie in den entsprechenden Figuren dargestellt ist. Die entsprechende Anordnung ist jedoch jeweils rein beispielhaft und nicht einschränkend. Der Fachmann ist ohne Weiteres in der Lage, bei Kenntnis der hierin offenbarten Lehren die Anordnung und Ausführung der Stützstruktur 7 in Bezug auf einen Stator 6 eines Planarmotors 5, sowie die Form und Ausführung der Transporteinheit 4 entsprechend anzupassen und zu verändern, um eine gewünschte beziehungsweise erforderliche Aufnahme von Prozesskräften und -momenten zu erzielen.

Die in den einzelnen Ausgestaltungen und Beispielen angegebenen einzelnen Merkmale und Varianten können (sofern nicht an Ort und Stelle etwas Anderes ausgeführt ist) mit denen der anderen Beispiele und Ausgestaltungen frei kombiniert und insbesondere zur Kennzeichnung der Erfindung in den Ansprüchen ohne zwangläufige Mitnahme der anderen Details der jeweiligen Ausgestaltung bzw. des jeweiligen Beispiels verwendet werden.

In der Beschreibung und den Ansprüchen bedeuten die Ausdrücke "im Wesentlichen" oder "etwa", sofern nichts Anderes an Ort und Stelle angegeben ist, eine Abweichung von bis zu 10 % des angegebenen Wertes, wenn es physikalisch möglich ist, sowohl nach unten als auch nach oben, ansonsten nur in die sinnvolle Richtung, bei Gradangaben (Winkel und Temperatur) sind damit ± 10° gemeint.

Begriffe, welche eine räumliche Anordnung beschreiben, wie etwa "oben", "unten", "neben", "seitlich", "horizontal", "vertikal", "rechts", "links" und ähnliche beziehen sich jeweils auf die in der beschriebenen Figur dargestellte Lage, oder, wenn nichts Anderes spezifisch angegeben ist, auf eine Anordnung des Planarmotors 5, dessen Transportebene 2 horizontal angeordnet ist. Derartige Begriffe dienen lediglich der Erleichterung der Verständlichkeit der Beschreibung und sind nicht einschränkend auszulegen.

### Bezugszeichen:

Bearbeitungsstation 1
Transportebene 2
Produkt 3, 3', 3"
Transporteinheit 4, 4', 4"
Planarmotor 5
Stator 6
Stützstruktur 7
Basis 8
Stützspulenanordnung 9
Antriebsmagnetanordnung 10
Schienenführungen 11
Seitenführung 12
Führungsstruktur 13
Halteanordnung 14
Werkzeug 15
Auflageelement 16, 16'
Walzenanordnung 17
Rollenanordnung 18
Stützpunkt 19
Ausnehmungen 20
Gleitelement 21
Stützmagnetanordnung 22
Auflagematte 23
Rahmens 24
Erhebungen 25
Profilschienen 26
Rillen 27
Bewegungsbahn 28

## Patentansprüche

1. Stützstruktur (7) für eine Transporteinheit (4) eines Planarmotors (3), wobei die Transporteinheit (4) von zumindest einem Stator (6) des Planarmotors (3) bewegbar ist und das Produkt (3) an der Transporteinheit (4) anordenbar ist, wobei in zumindest einer in Bezug auf die Stützstruktur (7) definierten Stützlage der Transporteinheit (4) die Stützstruktur (7) zumindest eine Stützkraft auf die Transporteinheit (4) aufbringt, während zumindest eine Prozesskraft auf das Produkt (3) einwirkt, wobei die Prozesskraft zumindest teilweise von dem Produkt (3) auf die Transporteinheit (4) übertragen wird, wobei die zumindest eine Stützkraft der zumindest einen Prozesskraft entgegenwirkt, wobei die Transporteinheit (4) mittels des zumindest einen Stators (6) des Planarmotors (3) schwebend in die Stützlage und aus dieser heraus bewegbar ist, wobei die Stützstruktur (7) an einer Basis (8) montiert ist, wobei die Stützstruktur (7) die von der Stützkraft bedingte Gegenkraft zumindest teilweise an die Basis (8) ableitet und wobei eine Kraftübertragung an eine aktive Oberfläche des Stators (6) verringert und vorzugsweise gänzlich vermieden wird.

2. Stützstruktur (7) nach Anspruch 1, **dadurch gekennzeichnet, dass** die Basis (8) an einer Trägerstruktur montiert ist, an welcher zumindest ein Stator (6) montiert ist.

3. Stützstruktur (7) nach Anspruch 1 oder 2, **dadurch gekennzeichnet, dass** die Stützstruktur (7) berührungslos auf die Transporteinheit (4) einwirkt.

4. Stützstruktur (7) nach einem der Ansprüche 1 bis 3, **dadurch gekennzeichnet, dass** die Stützstruktur (7) eine Stützspulenanordnung (9) und/oder eine Stützmagnetanordnung aufweist, welche auf eine Antriebsmagnetanordnung (10) und/oder auf eine Stützmagnetanordnung (22) der Transporteinheit (4) einwirkt.

5. Stützstruktur (7) nach einem der Ansprüche 1 bis 4, **dadurch gekennzeichnet, dass** die Stützstruktur (7) eine gleithemmende Formstruktur aufweist, welche insbesondere eine Auflagematte (23), einen Rahmen (24) und/oder zumindest eine Erhebung (25) und/oder Vertiefung aufweist.

6. Stützstruktur (7) nach einem der Ansprüche 1 bis 5, **dadurch gekennzeichnet, dass** die Stützstruktur (7) eine Gleitstruktur aufweist, welche insbesondere zumindest eine Profilschiene (26), eine Schienenführung (11), eine Seitenführung (12) und/oder eine Gleitfläche aufweist.

7. Stützstruktur (7) nach einem der Ansprüche 1 bis 6, **dadurch gekennzeichnet, dass** die Stützstruktur (7) eine Führungsstruktur (13) ausbildet, in welche eine an der Transporteinheit (4) angeordnete Halteanordnung (14) in Eingriff bringbar ist.

8. Stützstruktur (7) nach Anspruch 7, **dadurch gekennzeichnet, dass** die Führungsstruktur (13) eine Linearführung ausbildet, in welcher ein Gleitelement (21) der Halteanordnung (14) gleitend in Eingriff bringbar ist.

9. Bearbeitungsstation (1) zur Bearbeitung eines Produkts (3), welches an einer Transporteinheit (4) eines Planarmotors (5) anordenbar ist, wobei bei der Bearbeitung zumindest eine Prozesskraft auf das Produkt (3) einwirkt, die über das Produkt (3) an die Transporteinheit (4) übertragen wird, wobei die Bearbeitungsstation (1) zumindest eine Stützstruktur (7) gemäß einem der Ansprüche 1 bis 8 aufweist und wobei die Transporteinheit (4) während der Bearbeitung in zumindest einer Stützlage anordenbar ist.

10. Bearbeitungsstation (1) nach Anspruch 9, wobei die Prozesskraft eine von einem Werkzeug (15) aufgebrachte Kraft, eine magnetische oder elektromagnetische Kraft, eine Trägheitskraft, ein von solchen Kräften bewirktes Moment oder eine Kombination solcher Kräfte ist.

11. Planarmotor 5 mit einer Bearbeitungsstation (1) nach einem der Ansprüche 9 oder 10 und/oder einer Stützstruktur (7) nach einem der Ansprüche 1 bis 8.

12. Verfahren zum geregelten Antrieb einer Transporteinheit (4) mit einem Planarmotor (5) nach Anspruch 11, welches die folgenden Schritte aufweist:
- schwebend Bewegen der Transporteinheit (4) mittels zumindest eines Stators (6) des Planarmotors (5) in eine Stützlage,
- Aufbringen von zumindest einer Prozesskraft, welche auf ein an der Transporteinheit angeordneten Produkt einwirkt und auf die Transporteinheit (4) übertragen wird,
- Aufbringen von zumindest einer Stützkraft über die Stützstruktur (7) auf die Transporteinheit (4), wobei die Stützkraft der zumindest einen Prozesskraft entgegenwirkt, und
- schwebend Bewegen der Transporteinheit (4) mittels des zumindest einen Stators (6) des Planarmotors (5) aus der Stützlage heraus.
